# EUROPÄISCHE PATENTSCHRIFT

(11) **EP 0 669 053 B1**
(45) Veröffentlichungstag und Bekanntmachung des Hinweises auf die Patenterteilung: **02.12.1998**
(21) Anmeldenummer: 94901721.4
(22) Anmeldetag: 17.12.1993
(51) Int. Cl.: H02M 3/335, H02H 7/12

(54) **AKTIVE CLAMPING-SCHALTUNG**
ACTIVE CLAMPING CIRCUIT
CIRCUIT DE VERROUILLAGE ACTIF

(30) Priorität: 13.09.1993 CH 2734/93
(43) Veröffentlichungstag der Anmeldung: 30.08.1995
(73) Patentinhaber: MELCHER AG, 8610 Uster (CH)
(72) Erfinder: WEISS, Mathias, CH-8630 Rüti (CH); EGGER, Remo, CH-8610 Uster (CH)
(74) Vertreter: Salgo, Reinhold Caspar, Dr.
(86) Internationale Anmeldenummer: CH9300285
(87) Internationale Veröffentlichungsnummer: WO9508213

(56) Entgegenhaltungen:
- US-A- 4 870 554
- PATENT ABSTRACTS OF JAPAN vol. 6, no. 155 (E-125) (1033) 17. August 1982 & JP,A,57 078 368 (MATSUSHITA DENKO) 17. Mai 1982

## Beschreibung

Die vorliegende Erfindung betrifft eine Vorrichtung zur Begrenzung von periodischen oder aperiodischen Ueberspannungsspitzen in Stromversorgungsgeräten, insbesondere im Sekundärkreis von getakteten Stromversorgungsgeräten, und zur wirksamen Dämpfung der auf diese Spannungsspitzen folgenden Schwingung während eines definierten Zeitintervalls, wie dies im Patentanspruch 1 dargelegt ist.

Für spannungsgeregelte Stromversorgungsgeräte im wichtigen Anwendungsbereich von ca. 20-500W und Eingangsspannungen von etwa 20-500V werden häufig Eintakt-Durchflusswandler eingesetzt, die im Primärkreis getaktet werden.
Das Prinzip des Durchflusswandlers ist aus der Literatur an sich bekannt (Otmar Kilgenstein, Schaltnetzteile in der Praxis, Würzburg 1992; Joachim Wüstehube, Schaltnetzteile, Berlin 1982). Beschreibungen von Eintakt-Durchflusswandlern finden sich auch z.B. in den Patenten EP 88'082 und EP 111'493.
Bei der Beschreibung dieser Geräte wird zunächst von idealisierten Schaltelementen ausgegangen, bei denen die zeitlichen Strom- und Spannungsverläufe an den beiden Dioden des Sekundärkreises rechteckförmig sind. Werden die bei realen Dioden auftretenden Sperrverzugszeiten mitberücksichtigt, ergeben sich die aus der Literatur bekannten periodischen, kurzzeitigen Schaltspannungsspitzen. Diese Spannungsspitzen werden einerseits über den Transformator in den Primärkreis zurückgegeben und beanspruchen dort den Schalttransistor in unnötiger Weise, andererseits vermindern sie den Gesamtwirkungsgrad des Wandlers.
Zur Vermeidung dieser Nachteile wird in der Literatur die Verwendung von sehr schnellen Dioden (z.B. Schottky-Leistungsdioden) für die Gleichrichter- und die Freilaufdiode im Sekundärkreis des Schaltnetzteils empfohlen.

In US 4'870'554 wird eine Schaltung beschrieben, die im Primärkreis von Schaltreglern zur Begrenzung von Spannungsspitzen und zur Wiedergewinnung der in diesen vorhandenen Energie dient. Diese Schaltung ist allerdings sehr stark vom Aufbau des Schaltreglers abhängig und verlangt sogar die Verwendung eines speziell dafür angepassten Transformators.
In JP 57-78368 A wird eine Schaltung beschrieben, die ebenfalls in den Primärkreis von Schaltreglern eingebaut wird und zur Begrenzung von Spannungsspitzen dient. Die dort vorgesehene Zenerdiode wird wegen ihrer spannungsbegrenzenden Eigenschaft eingesetzt, ohne dass ihr zeitabhängiges Verhalten - praktisch keine Verzögerung in Vorwärtsrichtung, aber grosse Sperrverzögerung - eingesetzt oder angewendet würde. Die Energie in der Spannungspitze wird mit dieser Schaltung auch nicht wiederverwertet, sondern in einem Widerstand in Wärme umgewandelt.

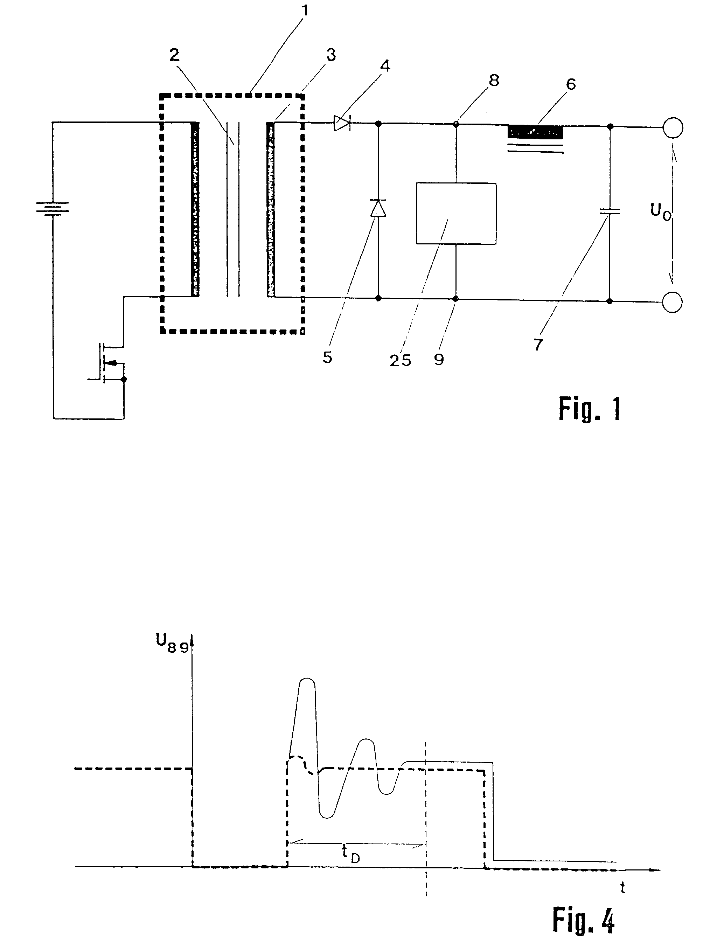

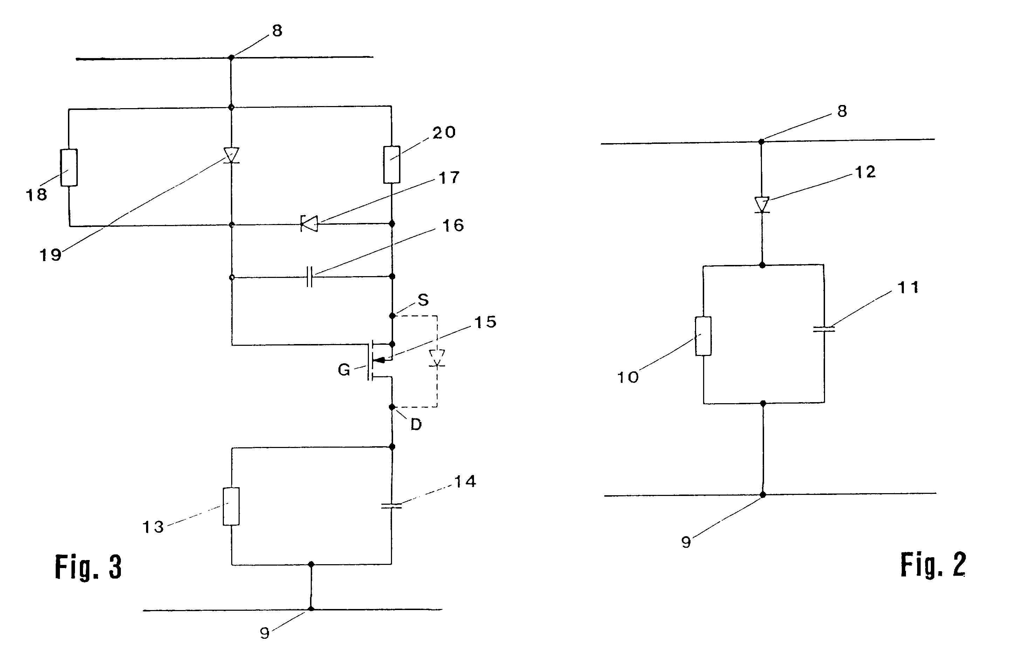

Ein bekanntes Verfahren zur Unterdrückung dieser periodischen Ueberspannungsspitzen an der Freilaufdiode ist das passive RCD-Clamping; der Stand der Technik wird anhand von Fig. 1 und Fig. 2 beschrieben.
Die Aufgabe, die mit der vorliegenden Erfindung gelöst werden soll, ist die Schaffung einer Schaltung zur Begrenzung der Ueberspannungsspitzen und zur Dämpfung der auf die Spannungsspitze folgenden Schwingung, die die Vorteile des RCD-Clampings ausnutzt und gleichzeitig dessen Nachteile vermeidet.

Die Lösung der Aufgabe ist wiedergegeben im kennzeichnenden Teil des Patentanspruchs 1.
Die Erfindung wird anhand der beigefügten Zeichnungen näher erläutert. Es zeigen:
- Fig. 1:: Sekundärkreis eines Durchflusswandlers nach dem Stand der Technik.
- Fig. 2:: Schaltung für passives RCD-Clamping mit Einsatz einer Zener-Diode.
- Fig. 3:: Erfindungsgemässe aktive Clamping-Schaltung.
- Fig. 4:: Spannungsverlauf der Nutzspannung (U₈₉) mit und ohne erfindungsgemässer Schaltung.

Die Fig. 1 zeigt das Schaltbild eines Netzgeräts, das nach dem Durchflusswandlerprinzip arbeitet und primär getaktet wird. Die primärseitige Schaltung samt ihrer Ansteuerschaltung entsprechen dem bekannten Stand der Technik und wurden darum grösstenteils weggelassen. Ebenfalls weggelassen wurde die Rückführungsleitung, die bei wechselnder Last am Ausgang die Ansteuerschaltung zur Veränderung des Tastverhältnisses veranlasst.
Die elektrischen Bauteile des Sekundärkreises sind in bekannter und dem Stand der Technik entsprechender weise zusammengeschaltet:
Ein Transformator 1 enthält einen Kern 2, auf dem eine Sekundärwicklung 3 sitzt. Einer der Anschlüsse dieser Wicklung ist mit einem Anschlusspunkt 9 verbunden. Ihr anderer Anschluss ist mit der Anode einer Diode 4, der Gleichrichterdiode, verbunden, deren Kathodenanschluss mit einem Anschlusspunkt 8 verbunden ist. Eine zweite Diode 5, die Freilaufdiode, ist mit ihrer Anode mit dem Punkt 9 und mit ihrer Kathode mit dem Punkt 8 verbunden. Eine Speicher-Drossel 6 ist mit einem ihrer Anschlüsse mit Punkt 8 verbunden. Ihr anderer Anschluss liegt an dem einen Anschluss eines Speicher-Kondensators 7, dessen anderer Anschluss am Punkt 9 liegt. An diesem Kondensator 7 wird die Ausgangsspannung Uₒ abgenommen. Zwischen den Anschlusspunkten 8 und 9 liegt ein mit 25 bezeichneter Schaltblock, der die Clamping-Schaltung, sowohl jene nach dem Stand der Technik, als auch die erfindungsgemässe, darstellt.

In Fig. 2 ist eine dem Stand der Technik entsprechende RCD-clamping-Schaltung als Inhalt des Schaltblocks 25 dargestellt. Die Anode einer schnellen Diode 12 wird mit dem Punkt 8 verbunden, an welchem die zu glättende Nutzspannung U₈₉ liegt. Ihre Kathode liegt an dem einen Anschluss eines Widerstands 10 und dem einen Anschluss eines Kondensators 11. Der andere Anschluss des Widerstands und der andere Anschluss des Kondensators sind mit dem Punkt 9 verbunden, der dem Nullpunkt der Nutzspannung U₈₉ entspricht. Der Kondensator 11 ist auf diese zwischen den Punkten 8 und 9 liegende Nutzspannung U₈₉ vorgeladen und funktioniert als "Gedächtnis" für diese Spannung. Tritt zwischen den Punkten 8 und 9 eine Ueberspannung auf, fliesst in der Diode 12 ein zusätzlicher Strom, und die Ueberspannung wird auf den Kondensator 11 weitergegeben. Da dieser dabei auf eine höhere Spannung aufgeladen wird, muss ein Teil der Ladung durch den parallel dazu geschalteten Widerstand 10 wieder abgeführt werden, damit die Spannung am Kondensator wieder auf das Niveau der Nutzspannung absinkt.
Durch die in der Literatur empfohlene Verwendung schneller Dioden mit kleinen Sperrverzugszeiten für die Gleichrichterdiode 4 und die Freilaufdiode 5 können die auftretenden periodische Schaltspannungsspitzen zwar etwas- verkleinert werden; das Problem ist damit aber nicht gelöst.

Das RCD-Clamping hat den Nachteil, dass über die Diode 12 und den Widerstand 10 nicht nur bei einer Ueberspannung, sondern ständig ein Strom fliesst, wodurch der Gesamtwirkungsgrad des Stromversorgungsgeräts verschlechtert wird. Auch die Energie, die in der Spannungsspitze liegt, wird so vollständig in Wärme umgewandelt.
Die Verwendung einer Zener-Diode anstelle einer schnellen Diode 12 hat gewisse Vorteile: die speziellen Eigenschaften von Zener-Dioden (sehr schnelles Einschalten, langsames Ausschalten) bringen bereits eine deutliche Verbesserung gegenüber der konventionellen Schaltung mit gewöhnlicher Diode, indem Zener-Dioden in Vorwärtsrichtung fast keine Verzögerung aufweisen und das RCD-Clamping daher voll zur Wirkung kommt. Ebenfalls nützlich ist die grosse Sperrverzögerung von Zener-Dioden, wodurch ein grosser Teil der zuerst in den Kondensator 11 abgeführten Energie im Verlauf der in diesem Arbeitstakt entstehenden abklingenden Schwingung wieder in den Nutzkreis zurückgeführt werden kann. Leider sind diese Eigenschaften der Zenerdiode undokumentiert und weder einstellbar noch gesichert über verschiedene Fertigungslose reproduzierbar. Weiter ist die in der Zenerdiode entstehende Verlustleistung bauformbedingt schlecht abführbar, weil Zenerdioden handelsüblich ein frei tragendes, selbstkühlendes Gehäuse besitzen.

In Fig. 3 ist die erfindungsgemässe aktive Clamping-Schaltung gemäss Patentanspruch 1 dargestellt, welche Inhalt des Schaltblocks 25 ist. Diese Schaltung nützt die Vorteile der passiven RCD-Clamping-Schaltung mit Zener-Diode, insbesondere die kurze Reaktionszeit und die Rückführung eines grossen Teils der Energie, voll aus. Gleichzeitig vermeidet sie deren Nachteile: die mangelnde Einstellbarkeit der zeitlichen Parameter und die mangelnde Reproduzierbarkeit über verschiedene Fertigungslose.
Ein erster Widerstand 13 und ein erster Kondensator 14 sind mit je einem ihrer Anschlüsse mit Punkt 9 verbunden. Diese Schaltelemente haben die gleichen Funktionen wie der Widerstand 10 und der Kondensator 11 nach Fig. 2: Der Kondensator 14 behält das Niveau der Nutzspannung U₈₉ bei, auf die er aufgeladen ist. Der Widerstand 13 dient dazu, diesen Kondensator langsam zu entladen, um die Funktion der Schaltung auch bei wechselnden Spannungsverhältnissen zu gewährleisten.
Der andere Anschluss des Widerstands 13 sowie der andere Anschluss des Kondensators 14 sind beide verbunden mit dem Drain D eines Feldeffekt-Transistors 15 (in der Zeichnung beispielsweise ein n-Kanal Enhancement MOSFET). Der Source-Anschluss S des MOSFETs 15 ist mit einem zweiten Widerstand 20 verbunden, dessen anderer Anschluss auf Punkt 8 liegt. Der Gate-Anschluss des MOSFETs 15 ist mit der Kathode einer Diode 19 verbunden, deren Anode ebenfalls auf Punkt 8 liegt.
Beim Eintreffen eines Ueberspannungsimpulses zwischen den Punkten 8 und 9 wirkt die Substratdiode des MOSFETs 15 zunächst einmal als schnelle Diode und erfüllt damit die gleiche Funktion wie die Diode 12 im anhand von Fig. 2 beschriebenen RCD-clamping: die Source-Drain-Strecke leitet über die Substratdiode und lädt über den niederohmigen Widerstand 20 den Kondensator 14 auf eine höhere Spannung auf.
Um die Energie, welche in den Kondensator 14 abgeführt worden ist, wieder zurückgewinnen zu können, wird nach dem Auftreten der Spannungsspitze zwischen 8 und 9 die Source-Drain-Strecke während einer definierten Zeit in Richtung Drain-Source leitend gemacht. Dazu wird zwischen Source S und Gate G des MOSFETs 15 eine Spannung U_{GS} aufgebaut, die den MOSFET 15 einschaltet.
Dies wird in folgender Weise erreicht: Während der Aufladephase des Kondensators 14 fliesst durch den Widerstand 20 ein Strom von Punkt 8 in den Kondensator 14, wodurch sich am widerstand 20 ein Spannungsabfall ergibt. Die Diode 19, beispielsweise eine schnelle Schottky-Diode, liegt in Durchlassrichtung zwischen dem Punkt 8 und dem Gate G des MOSFETs 15 und leitet diesen Spannungsabfall an das Gate G des MOSFETs 15 weiter. Ein zweiter Kondensator 16 ist einerseits am Gate G, andererseits an der Source S angeschlossen. Durch den Strom der Diode 19 wird der Kondensator 16 aufgeladen; die Kapazität dieses Kondensators wird wesentlich grösser als die innere Gate-Source-Kapazität des MOSFETs 15 gewählt, um den Einfluss dieser inneren Kapazität auf die Funktion der Schaltung zu minimieren. Ueberschreitet die Spannung U_{GS} am Kondensator 16 einen bestimmten positiven Wert, beginnt die Drain-Source-Strecke zu leiten und führt damit einen grossen Teil der im Kondensator 14 gespeicherten Energie wieder in den Nutzkreis zurück. Anstelle einer Schottky-Diode kann als Diode 19 auch eine Zenerdiode vorgesehen werden.
Ein dritter Widerstand 18 ist einerseits mit Punkt 8, andererseits mit dem Gate G verbunden. Ueber diesen Widerstand wird der Kondensator 16 und mit ihm die Source-Gate-Kapazität entladen, damit der MOSFET 15 nach dem Ende des Ueberspannungsimpulses und dem Abklingen der nachfolgenden Schwingung in zeitlich definierter Weise wieder zu sperren beginnt. Zugleich dämpfen der niederohmige Widerstand 20 und der relativ grosse Kondensator 14 die auf das Abschalten der Freilaufdiode 5 folgende Schwingung in effizienter Weise, wie das in Fig. 4 gezeigt wird.

In Fig. 4 ist in einem Diagramm der Verlauf der Nutzspannung U₈₉ in Abhängigkeit von der Zeit t wiedergegeben, wie sie sich ohne resp. mit zugeschaltetem Block 25 zwischen den Punkten 8 und 9 ergibt. Mit t_{D} wird in dieser Figur die Einschaltdauer des MOSFETs 15 bezeichnet.
Eine Zenerdiode oder eine Ueberspannungsschutzdiode 17 ist mit ihrer Anode an der Source S und mit ihrer Kathode am Gate G verbunden. Sie schützt den MOSFET 15 vor unzulässig hohen Gate-Source-Spannungen.

## Patentansprüche

1. Vorrichtung zum Anschluß am Ausgang von Stromversorgungsgeräten für Gleichstrom und zur Begrenzung von periodischen oder aperiodischen Ueberspannungsspitzen und zur wirksamen Dämpfung der auf diese Spannungsspitzen folgenden Schwingung während eines definierten Zeitintervalls, welche mindestens je einen Widerstand, einen Kondensator und ein gleichrichtendes Element enthält, dadurch gekennzeichnet, dass
- als ein erstes gleichrichtendes Element ein aktives Schaltungselement vorhanden ist,
- ein erster Kondensator (14) vorhanden ist, dessen einer Anschluss mit dem Nullpunkt (9) der zu überwachenden Nutzspannung (U₈₉) verbunden ist,
- das aktive Schaltungselement ein MOSFET (15) ist, dessen Drain (D) mit dem anderen Anschluss des ersten Kondensators (14) verbunden ist,
- ein erster Widerstand (13) vorhanden und parallel geschaltet ist mit dem ersten Kondensator (14),
- die Source (S) des MOSFETs (15) über einen weiteren vorhandenen Widerstand (20) mit einem Anschlusspunkt (8) der zu überwachenden Spannung verbunden ist,
- als weiteres gleichrichtendes Element eine schnelle Diode (19) vorhanden ist, deren Anode ebenfalls am Anschlusspunkt (8) und deren Kathode am Gate (G) des MOSFETs (15) liegt,
- ein dritter Widerstand (18) vorhanden und parallel geschaltet ist mit der Diode (19),
- ein weiterer Kondensator (16) vorhanden und am Gate (G) und an der Source (S) des MOSFETs (15) angeschlossen ist,
wodurch Ueberspannungsspitzen im wesentlichen verzugs frei begrenzt, die auf eine Spannungsspitze nachfolgenden Schwingung wirksam gedämpft und die Energien in der Spannungsspitze und in den dieser Spannungsspitze nachfolgenden Schwingung zum überwiegenden Teil wieder in den Sekundärkreis zurückgeführt werden.

2. Vorrichtung nach Patentanspruch 1, dadurch gekennzeichnet, dass das Stromversorgungsgerät ein Schaltregler ist.

3. Vorrichtung nach einem der Patentansprüche 1 oder 2, dadurch gekennzeichnet, dass zusätzlich eine Zenerdiode (17) vorhanden ist, die mit ihrer Kathode am Gate (G) und mit ihrer Anode an der Source (S) des MOSFETs (15) angeschlossen ist.

4. Vorrichtung nach Patentanspruch 3, dadurch gekennzeichnet, dass anstelle der schnellen Diode (19) eine weitere Zenerdiode vorhanden ist.

## Claims

1. A device for connection at the output of power supply equipment for direct current for the limiting of periodic and aperiodic overvoltage peaks and for the effective attenuation of the ringing oscillation following these voltage peaks, during a defined time interval, which includes at least one resistor, one capacitor and a rectifying element, characterised in that
- an active circuit element is present as a first rectifying element,
- a first capacitor (14) is present, one of whose terminals is connected to the null point (9) of the load voltage (U₈₉) to be monitored,
- the active circuit element is a MOSFET (15), whose drain (D) is connected to the other terminal of the first capacitor (14),
- a first resistor (13) is present and connected in parallel with the first capacitor (14),
- the source (S) of the MOSFET (15) is connected via a further resistor (20) present to a connection point (8) of the voltage to be monitored,
- a fast diode (19) is present as a further rectifying element, whose anode is similarly connected to connection point (8) and whose cathode is connected to the gate (G) of the MOSFET (15),
- a third resistor (16) is present and connected to the gate (G) and to the source (S) of the MOSFET (15),
whereby overvoltage peaks are limited essentially without delay, the following ringing oscillation is effectively attenuated and the energy in the voltage peaks and in the ringing oscillation following these voltage peaks is to the overwhelming part taken back into the secondary circuit.

2. A device according to Claim 1, characterised in that the power supply equipment is a switched mode inverter.

3. A device according to one of the Claims 1 or 2, characterised in that in addition a zener diode (17) is present, which is connected by its cathode to the gate (G) and by its anode to the source (S) of the MOSFET (15).

4. A device according to Claim 3, characterised in that instead of the fast diode (19) a further zener diode is present.

## Revendications

1. Dispositif destiné à être raccordé à la sortie d'appareils d'alimentation pour courant continu; pour limiter des pointes de surtension périodiques ou apériodiques et amortir efficacement l'oscillation consécutive à ces pointes de tension pendant une durée définie, lequel dispositif contient au moins une résistance, un condensateur et un élément redresseur, caractérisé en ce que :
- il est prévu comme premier élément redresseur un élément de circuit actif,
- il est prévu un premier condensateur (14) dont une première connexion est reliée au point zéro (9) de la tension utile à surveiller (U₈₉),
- l'élément de circuit actif est un transistor MOSFET (15) dont le drain (D) est relié à la seconde connexion du premier condensateur (14),
- il est prévu une première résistance (13) qui est montée en parallèle avec le premier condensateur (14),
- la source (S) du transistor MOSFET (15) est reliée par l'intermédiaire d'une deuxième résistance (20) à un point de connexion (8) de la tension à surveiller,
- il est prévu comme second élément redresseur une diode rapide (19) dont l'anode est également reliée au point de connexion (8) et dont la cathode est reliée à la grille (G) du transistor MOSFET (15),
- il est prévu une troisième résistance (18) qui est montée en parallèle avec la diode (19),
- il est prévu un second condensateur (16) qui est relié à la grille (G) et à la source (S) du transistor MOSFET (15),
ce qui limite pratiquement sans retard les pointes de surtension, amortit efficacement l'oscillation consécutive à une pointe de tension et ramène dans le circuit secondaire la majeure partie des énergies contenues dans la pointe de tension et dans l'oscillation consécutive à cette pointe de tension.

2. Dispositif selon la revendication 1, caractérisé en ce que l'appareil d'alimentation en courant électrique est un régulateur de commutation.

3. Dispositif selon la revendication 1 ou 2, caractérisé en ce qu'il est prévu en outre une diode de Zener (17) qui est reliée au niveau de sa cathode à la grille (G), et au niveau de son anode à la source (S) du transistor MOSFET (15).

4. Dispositif selon la revendication 3, caractérisé en ce qu'il est prévu à la place de la diode rapide (19) une seconde diode de Zener.
